# EUROPEAN PATENT SPECIFICATION

(11) **EP 2 361 217 B1**
(45) Date of publication and mention of the grant of the patent: **13.11.2013**
(21) Application number: 09779292.3
(22) Date of filing: 15.04.2009
(51) Int. Cl.: F03D 11/00, B66C 1/10, B66F 3/46, B66F 9/12, F03D 1/00, B66F 9/18

(54) **SYSTEM AND METHOD FOR HANDLING A NACELLE OF A WIND TURBINE**
SYSTEM UND VERFAHREN ZUR HANDHABUNG EINER GONDEL FÜR EINE WINDTURBINE
SYSTÈME ET PROCÉDÉ POUR MANIPULER UNE NACELLE D'UNE ÉOLIENNE

(30) Priority: 16.12.2008 US 122828 P
(43) Date of publication of application: 31.08.2011
(73) Proprietor: Siemens Aktiengesellschaft, 80333 München (DE)
(72) Inventor: POULSEN, Henning, DK-6900 Skjern (DK); WESTERGAARD, Jan Emil, DK-7330 Brande (DK)
(86) International application number: PCT/EP2009/054419
(87) International publication number: WO 2010/069611

(56) References cited:
- WO-A-2004/101313
- WO-A-2005/100786
- WO-A-2006/076920
- US-A- 2 820 644
- US-A- 4 206 906
- US-A- 4 400 133
- US-A1- 2007 189 895

## Description

### Field of invention

The present invention relates to the technical field of wind turbines and in particular to the field of transporting components of a wind turbine. Specifically, the present invention relates to a system and to a method for handling a nacelle of a wind turbine for instance for the purpose of transporting the nacelle to or from a site of installation of the wind turbine.

### Art Background

When large nacelles of wind turbines are to be shipped a large crane is needed to move and lift each nacelle to a vehicle to further transport each nacelle to the site for erection of the wind turbines or to transport each nacelle to a ship or a train for further transportation or just to store the nacelle before a further transportation is possible.

However, a large crane used both for loading or unloading a nacelle to or from a vehicle for transportation is typically very expensive and slow when many nacelles are to be shipped. Further, when the crane is only a fixed portal crane there may be not enough space available below the crane for all the nacelles to be stored and to be shipped.

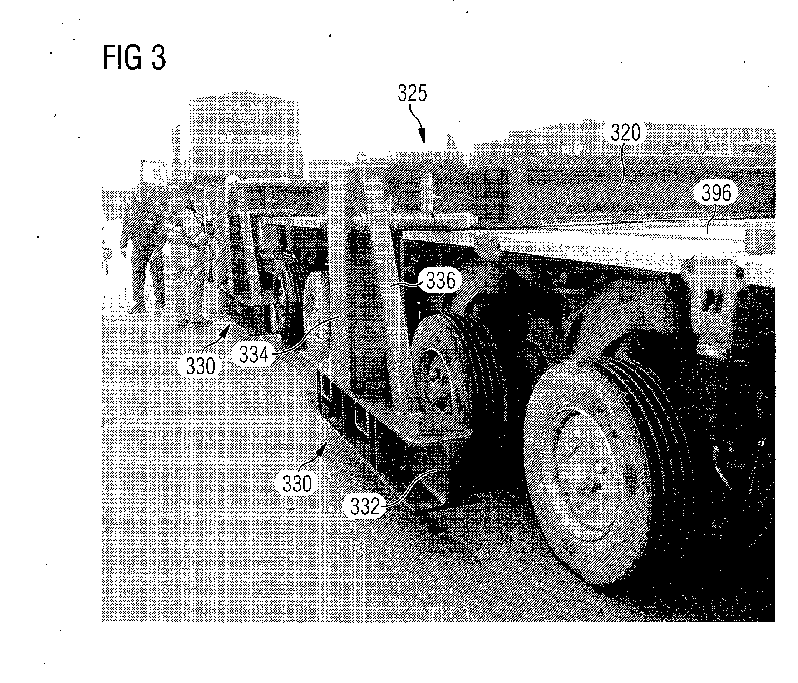

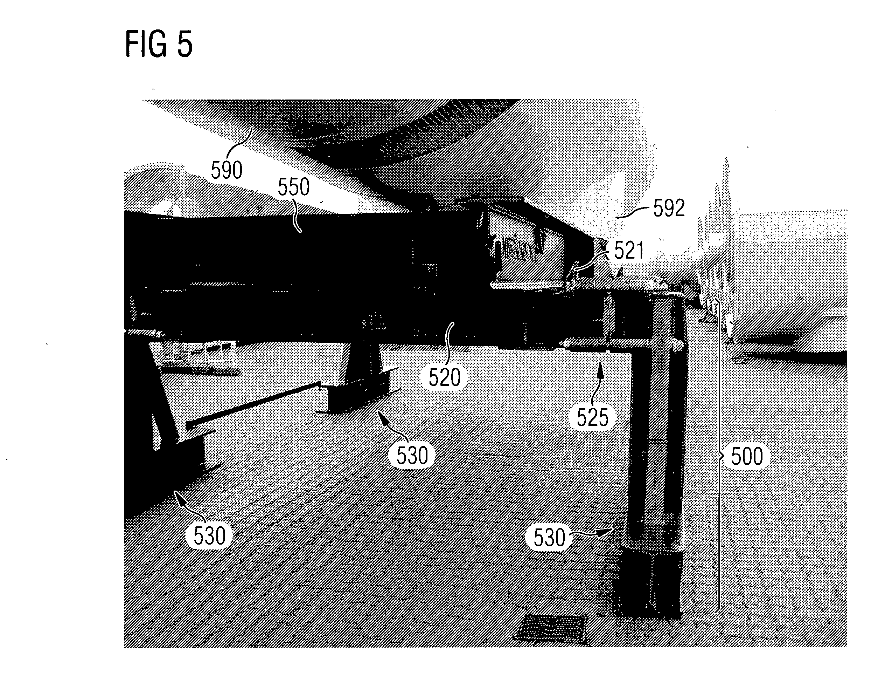

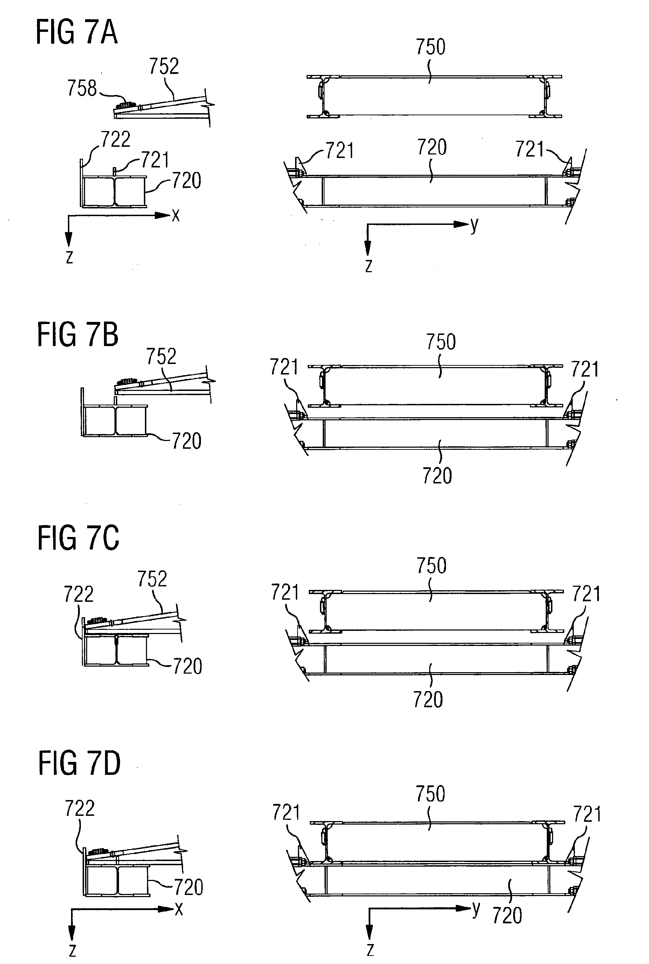

WO 2010/066255 A1 discloses with Figure 7 in connection with Figure 5a transport system 1 for a heavy element such as a wind turbine nacelle (see page 8, lines 14-15). The transport system I comprises a frame structure 15 having four projecting parts 19. The projecting parts 19 are used for interconnecting the frame structure 15 in between a 1 St transport wheel unit 4 and a 2nd transport wheel unit 5 (see Figure 3). On top of the frame structure 15 there is provided a cylindrical flange 16 which represents a connection means for a not depicted nacelle. The connection means 16 is formed in such a manner that a tower connection of the nacelle can be attached to the connection means 16 (see page 10, lines 9-14). The transport system 1 further comprises four legs 17 each being provided with two engagement openings (see Fig. 7). The four legs 17 can be attached to the frame structure 15 either directly (see page 12, line 34) or indirectly via extension means (see page 13, lines 15-18).

US 3289868 A discloses to load or unload a container to or from a truck by a system comprising hydraulic displaceable legs, which are attached to the container in a demountable manner.

WO 2008/000268 A1 discloses a handling system for a nacelle of a wind turbine in connection with self-loading or self-unloading of the nacelle to or from a vehicle. The handling system comprises two or more lifting means for displacing the nacelle substantially in a vertical direction during self-loading or self-unloading of a nacelle. The lifting means comprises displacing means with displaceable legs.

US 2,820,644 discloses an engine trailer comprising a frame having closely spaced side rails. The frame is supported by rear wheel assemblies and front wheel assemblies. The front wheel assemblies are connected to the frame through an axle and interconnected by a steering mechanism. A further axle engages the rear wheel assemblies. All of the wheel assemblies are of the caster type which can be swiveled relative to their axles. Also included with the trailer are roller assemblies which carry arcuate engine supporting ring members which are adapted for an attachment to a jet engine being transported by the engine trailer.

US 4,400,133 discloses a vehicle for transporting a ship screw. The vehicle comprises a base structure forming a platform of the vehicle. When the vehicle is at rest the base structure can be secured to ground by means of four ram lifts, one ram lift being arranged at respectively one corner of the base structure. On the top side of the base structure there are formed two supporting devices each consisting of a main cylinder-ram lift, a shelf representing a beam and a pair of plates being formed in such a manner that the axis of a ship screw can be accommodated.

WO 2004/101313 A1 discloses a transportation system for a component of a wind turbine. The component may be e.g. a nacelle. The transportation system comprises a truck which is pulling two spatially separated trailers each comprising a plurality of wheel axles. Each trailer carries a trailer lift frame. During transportation of the wind turbine component one trailer lift frame is coupled to one end of the wind turbine component and the other trailer lift frame is coupled to the other end of the wind turbine component. Thereby, the wind turbine component is suspended between the two trailer lift frames and hovers over ground.

There may be a need for improving the handling of a nacelle in particular for transportation purposes.

### Summary of the Invention

This need may be met by the subject matter according to the independent claims. Advantageous embodiments of the present invention are described by the dependent claims.

According to a first aspect of the invention there is provided a system for handling a nacelle of a wind turbine, in particular for handling a nacelle of a wind turbine for the purpose of transporting the nacelle The described handling system comprises a first supporting device and a second supporting device, wherein each supporting device comprises (a) a crossbeam extending between a left end section of the crossbeam and a right end section of the crossbeam, the crossbeam being adapted for supporting the nacelle in between the left end section and the right end section, (b) a left pedestal being attached to the left end section in a detachable manner, and (c) a right pedestal being attached to the right end section in a detachable manner.

The described nacelle handling system is based on the idea that the pedestals can be demounted from the respective crossbeam if they are not needed for keeping the respective crossbeam in an elevation above ground, which elevation depends on the vertical extension of the pedestals when being vertically oriented. A demounting of the pedestal may be done for instance after the two crossbeams together with the supported nacelle are situated on a loading platform of a transportation device such as for instance a truck or a coach or locomotive cart.

Each supporting device may be for instance a supporting trestle. Thereby, the supporting trestle may comprise a mechanical stability, which allows for carrying, together with at least one further supporting trestle, the nacelle.

Each crossbeam may be any mechanically stable element, which, when the nacelle is supported, extends at least from the left side to the right side of the nacelle.

Each pedestal may be any construction, which allows for keeping the crossbeam at a certain elevation above ground. In particular, the pedestal may be a leg or a bearing block.

Generally speaking, the nacelle can be by placed on two or more supporting devices for instance by using a crane. The respective two pedestals of each supporting device, which are attached to the crossbeam in a demountable manner, can be removed or demounted from the crossbeam if they are not needed in particular when they are bulky and/or make the whole arrangement comprising (a) the nacelle, (b) the at least two crossbeams and (c) the pedestals attached to the respective crossbeam unwieldy.

When the nacelle is to be moved or transported the loading platform in particular of a truck or trailer is positioned beneath the two crossbeams of the supporting devices. Then, the loading platform of the truck or trailer may be raised at least a little such that both the nacelle and the supporting devices are lifted. The raising of the loading platform of the truck or trailer may be done by hydraulics, by pneumatics, mechanically, electrically and/or by any kind of actuator installed on the truck or trailer. The pedestals of each supporting device may be finally demounted before the nacelle is driven away by the truck or trailer.

When the nacelle is to be unloaded from the truck or trailer the pedestals may be mounted again just before unloading the nacelle from the truck or trailer. The unloading is then done by lowering the loading platform of the truck or trailer at least a little and then driving away the truck or trailer empty i.e. without having the nacelle loaded any more.

It is mentioned that if the nacelle is only to be moved locally e.g. within a working and/or a storing area it may not be necessary to demount the pedestals of the supporting devices before moving the nacelle.

In other words, the nacelle may be placed on the supporting devices each being equipped with demountable pedestals or legs for moving, transportation or storing of the nacelle. This may make the moving, the transportation and/or the storing of the nacelle of a wind turbine very flexible and cheap. The supporting devices can be used in connection with many kinds of different types of nacelles without an adaption, as the nacelle is just resting on top of the crossbeams of the supporting devices.

According to an embodiment of the invention the crossbeam is adapted to indirectly support the nacelle. This may provide the advantage that the nacelle does not come into direct mechanical contact with the crossbeam. An unwanted damage of the nacelle housing such as for instance a scratching of the outer surface of the nacelle housing may be avoided.

According to a further embodiment of the invention the crossbeam is adapted to support an attachment arrangement, which is constructed in such a manner that for transporting and/or storing the nacelle the nacelle can be attached to the attachment arrangement in a detachable manner.

The attachment arrangement may have the general shape of a plate, a frame or a bed. The attachment arrangement may be mounted to the bottom of the nacelle. When supporting the nacelle with the at least two supporting devices the attachment arrangement may rest on top of the crossbeams of the respective supporting devices. Thereby, the attachment arrangement may ensure that the nacelle is safely placed on the crossbeams and that the surface of the nacelle does not get any scratches as the nacelle is normally painted.

It is mentioned that the nacelle may be mounted to the attachment arrangement in a slightly angular manner. This may provide the advantage that, if the nacelle has substantially an outer shape being at least approximately similar to a truncated cone (i.e. the diameter of the nacelle at a rear end is smaller than the diameter of the nacelle at a front end), the overall height of an assembly comprising the supporting devices, the attachment arrangement and the nacelle may be reduced. As a consequence, when transporting the nacelle there can be used also tunnels, underbridges and/or underground crossings, which have a limited height.

According to a further embodiment of the invention the left pedestal and/or the right pedestal is capable of being adapted with respect to the vertical extension of the respective pedestal. This may provide the advantage that the height for supporting the nacelle can be adjusted in an appropriate way in order to ensure a convenient further nacelle handling. Furthermore, if the left pedestal and the right pedestal have a different length with respect to each other, the nacelle can be securely supported even on an uneven and/or on a bumpy ground.

The described capability for adapting the length or the height of the pedestals may be realized in different ways. For instance a pedestal may be adjusted by inserting an extension piece into or by removing an extension piece from the pedestal. Further, the pedestal may be equipped with vertical or at least partially vertical legs, which are automatically displaceable for instance by using hydraulics. In such a case the elevation of the supported nacelle can be varied even if actually the nacelle is situated on the two crossbeams. In this way it is also possible to lower the nacelle down to the ground on a working place and/or a storing place.

In this respect it is mentioned that the supporting devices can be provided with a set of different pedestals, wherein at least some of the pedestals have a different length. Specifically, in one embodiment the detachable respectively demountable pedestals are produced in sets of different lengths to ensure that the length of the pedestals fit to the height of the loading platform of the specific transportation device that is used.

In accordance with the first aspect of the invention each supporting device comprises (a) at least one left engagement opening being formed on a left side of the supporting device and (b) at least one right engagement opening being formed on a right side of the supporting device. This may provide the advantage that a handling of the supporting devices in particular for placing the supporting device to a correct position in order to be ready for supporting the nacelle can be facilitated. Thereby, the left and/or the right engagement openings may be formed within the crossbeam and/or within the respective pedestal.

Preferably, on each side of the supporting device there are provided at least two engagement openings, which are appropriately spaced apart from each other. Then, for instance a conventional forklift can be used for correctly placing the supporting device.

In other words, the two or more supporting devices may be placed directly on a transportation device by employing one or more forklift trucks before the nacelle is placed on the supporting devices. When the forklift trucks are used to lift the supporting devices each fork may be driven through a separate rectangular hole in a bottom beam of each pedestal of each supporting device.

According to a further embodiment of the invention the system further comprises a distance element, which extends between the first supporting device and the second supporting device and which is attached to the two supporting devices in a demountable manner. This may provide the advantage that the two or more supporting devices are placed in a specific distance between each other. Thereby, it may be ensured that the nacelle is placed in a safe way on top of the at least two crossbeams.

Preferably the described handling system comprises at least two distance elements, wherein one distance element is provided at a left side of the handling system and the other distance element is provided at the right side of the handling system. This means that, if a nacelle is supported respectively carried by the described handling system, there is one distance element provided at the left side of nacelle and the other distance element provided at the right side of the nacelle. Thereby, there terms left side and right side of the nacelle may refer to a longitudinal axis of the nacelle.

The distance elements may be attached to the pedestals of the two supporting devices. Preferably, the distance elements are attached to a bottom portion such as a bottom beam of the respective pedestal. This may provide the advantage that the leverage will be optimized such that the mechanical stability can be optimized.

It is mentioned that if the described handling system comprises more than two supporting devices, there may be provided an appropriate number of distance elements, which mechanically connect also the further supporting device(s) with at least one of the first and the second supporting device.

It is further mentioned that the length of the distance element(s) may be adjustable. Thereby, the longitudinal dimension of the whole handling system may be adjusted properly to the dimension of the nacelle which is supposed to be supported.

According to a further embodiment of the invention the length of the crossbeam is adjustable. This may provide the advantage that the supporting devices can be optimally fit (a) to the width of the loading platform of the specific transportation device which is used (for instance a truck or a trailer) and/or (b) to the width of a specific nacelle type.

The length adjustability of the crossbeam may be realized for instance by inserting one or more appropriate extension piece(s) into or by removing one or more extension piece(s) from the crossbeam. Further, the lengths of the crossbeam may be provided with an appropriate automatic extension mechanism such as for instance a telescopic mechanism.

According to a further embodiment of the invention the system further comprises at least one guide element, which is provided at the crossbeam and which is adapted for ensuring that when placing the nacelle onto the crossbeam the nacelle is placed in a proper horizontal position.

In other words, the at least one guide element may be used for guiding the placement of the nacelle in the forward and/or the sideways direction in relation to the respective supporting device.

It is mentioned that if the above mentioned attachment arrangement is used for indirectly supporting the nacelle the guide element may mechanically interact with the attachment arrangement. Thereby, an unwanted scratching of the surface of the nacelle can be effectively avoided.

According to a further embodiment of the invention the guide element is formed in such a manner that a correct placement of the nacelle with respect to a longitudinal extension of the crossbeam is ensured.

In this context the guide element may be called a side guide element, because with respect to a longitudinal extension of the nacelle a lateral or a sidewise correct placement of the nacelle may be ensured.

If there are provided at least two guide elements at the same crossbeam, the lateral position of the nacelle on the crossbeam may be fixed both with respect to the left side and with respect to the right side of the crossbeam respectively of the nacelle.

According to a further embodiment of the invention the guide element is formed in such a manner that a correct placement of the nacelle with respect to a direction being perpendicular to a longitudinal extension of the crossbeam is ensured.

In this context the guide element may be called a front guide element or a back guide element, because with respect to a longitudinal extension of the nacelle a correct placement of the nacelle is ensured in a forward and/or in a backward direction.

If there are provided at least two guide elements at different crossbeams, the longitudinal position of the nacelle on the described handling system may be fixed both with respect to the front and with respect to the back direction of the nacelle.

According to a further embodiment of the invention the guide element comprises a slanted surface. This may provide the advantage that when lowering the nacelle onto the crossbeams the nacelle or, if applicable, the attachment arrangement may slide downward along the slanted surface into the correct lateral and/or longitudinal position.

Preferably, two slanted guide elements are employed which cooperate with each other in such a manner that when lowering the nacelle the nacelle or, if applicable, the attachment arrangement is spatially constricted in between the two side elements. This may hold both for the above mentioned side guide elements and for the above mentioned front/back guide elements.

In other words, the guide elements may be made with an angle so that the distance between two cooperating guide elements is increasingly larger in the upwards direction. This means that when lowering the nacelle the nacelle or, if applicable, the attachment arrangement is incrementally constrained in between the two cooperating guide elements towards the final position on the handling system.

According to a further aspect of the invention there is described a method for handling a nacelle of a wind turbine with a handling system as described above. The described handling method comprises (a) bringing the nacelle to a position with respect to the handling system, wherein the two crossbeams of the system are located below the nacelle, and (b) lifting the system and/or lowering the nacelle such that the nacelle is directly or indirectly supported by the two crossbeams.

The provided handling method is based on the idea, that the above described handling system can be used in an effective manner in order to support the nacelle for transportation and/or for storage purposes.

The nacelle may be brought to the appropriate vertical position with respect to the crossbeams of the handling system for instance by using a crane. Thereby, the nacelle may be lowered by the crane until it is hanging just above the crossbeams of the at least two supporting devices.

When lifting the system, wherein the crossbeams are approached from below to the nacelle or, if applicable, to the attachment arrangement, the nacelle may be moved or pushed forward so that the nacelle or, if applicable the attachment arrangement, comes into contact with at least one of the guide elements described above. Thereby, a proper positioning of the nacelle with respect to the handling system may be ensured when further lowering the nacelle and/or when further lifting the handling system. The proper positioning may be ensured with respect to a longitudinal and/or with respect to a transversal direction of the nacelle. Thereby, the direction of the nacelle may be defined by its longitudinal extension.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1a shows a side view of a nacelle handling system together with a nacelle, which is supported indirectly by means of a nacelle supporting bed.
Figure 1b shows two pedestals of the handling system depicted in Figure 1a, wherein the pedestals are mechanically connected with a distance element in order to stabilize the whole nacelle handling system.
Figure 1c shows a cross sectional view of a crossbeam of the handling system depicted in Figure 1a.
Figure 1d shows a front view of the handling system depicted in Figure 1a together with a supported nacelle supporting bed
Figure 2 shows a photographic picture of a nacelle being supported by a nacelle handling system in accordance with an embodiment of the invention.
Figure 3 shows a photographic picture of a supporting device being loaded on a loading platform of a truck.
Figure 4 shows a photographic picture of a supporting device, which is placed on a loading platform of a truck by means of two forklifts.
Figure 5 shows a photographic picture of a nacelle handling system, which is placed on the ground.
Figure 6 shows a cross sectional side view of a nacelle supporting bed being supported by two crossbeams.
Figures 7a, 7b, 7c and 7d show in respectively two different cross sectional views the procedure for placing a nacelle supporting bed onto two crossbeams of a nacelle handling system.

### Detailed Description

The illustration in the drawing may be schematically. It is noted that in different figures, similar or identical elements are provided with the same reference signs or with reference signs, which are different from the corresponding reference signs only within the first digit.

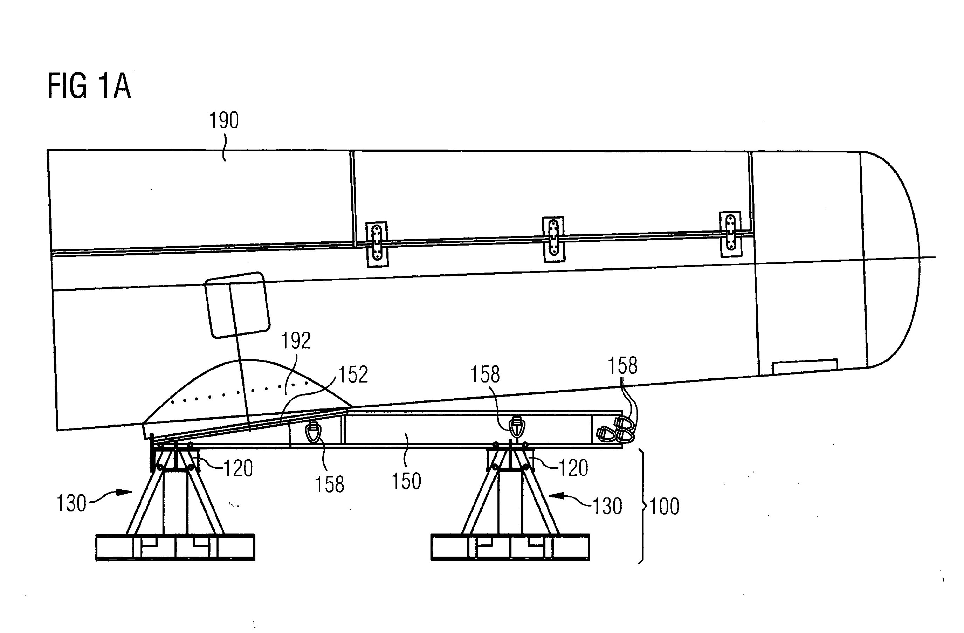

Figure 1a shows a side view of a nacelle handling system 100 together with a supported nacelle 190. The handling system 100 comprises two supporting devices, each having a crossbeam 120 and two pedestals 130. In Figure 1a, because of the perspective, only one pedestal 130 of each supporting device can be seen.

As can be seen from Figure 1a, the nacelle 190 is not supported directly by the two crossbeams 120. The two crossbeams 120 are at first supporting an attachment arrangement 150. In the following the attachment arrangement is also called a nacelle supporting bed.

According to the embodiment described here the nacelle supporting bed 150 comprises a slanted surface 152. The slanted surface is formed in such a manner, that a connection element 192 of the nacelle can be temporarily but securely attached to the nacelle supporting bed 150. The connection element 192 may be for instance a flange, which is permanently fixed to the housing of the nacelle 190 e.g. by means of welding. When the nacelle is in operation the flange 192 may be connected to the tower of the respective wind turbine.

The nacelle supporting bed 150 comprises a plurality of eyes 158, which allow for instance a row or a hook to be engaged. Therefore, the eyes 158 may be used for facilitating the handling of the nacelle supporting bed 150 during a reloading procedure, during which the nacelle 190 together with the nacelle supporting bed 150 may be held for instance by a crane.

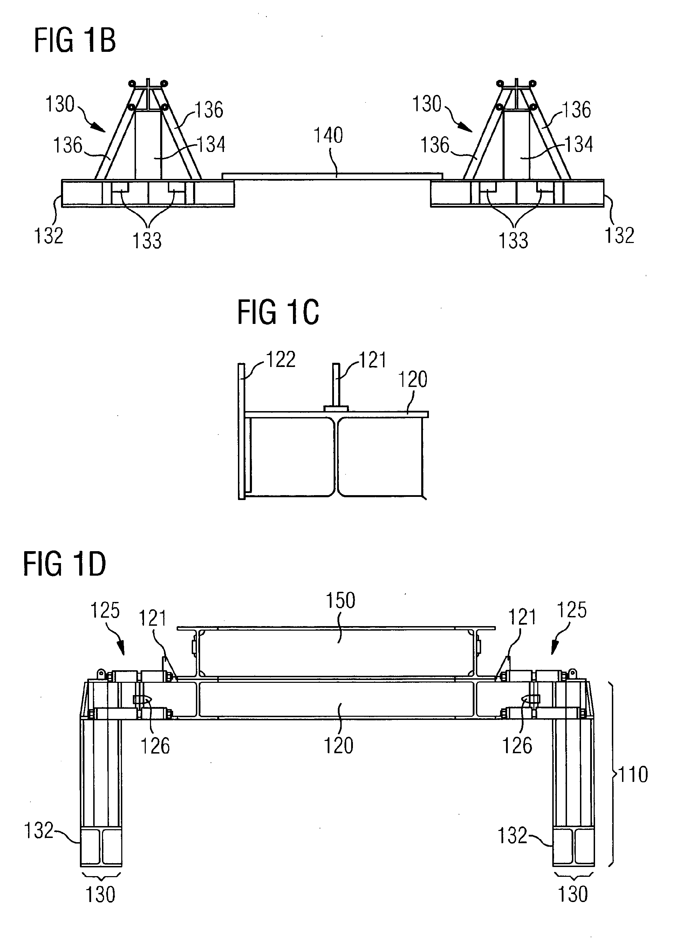

Figure 1b shows two pedestals 130 of the handling system 100. According to the embodiment described here each pedestal 130 comprises a bottom beam 132, a vertical bar 134 and two slanted bars 136. In the bottom beam 132 there are formed two engagement openings 133. The engagement openings 133 may be used for handling the respective pedestal 130. According to the embodiment described here the engagement openings 133 may be used by a forklift truck, which can insert the front ends of its two fork pieces into the openings 133.

The two pedestals 130 shown in Figure 1b are assigned to different supporting devices respectively to different crossbeams of the nacelle handling system 100. In order to increase the mechanical stability of the handling system 100 the two pedestals 130 are connected with a distance element 140. According to the embodiment described here the distance element is a distance bar 140, which is attached to the respective bottom beam 132 in a demountable manner. This means that the distance bar 140 can be removed from the two pedestals 130 when it is not needed. This may be the case for instance when the pedestals 130 are removed from the respective crossbeam 120 for instance when the nacelle 190 is transported on a loading platform of a truck or a trailer.

Figure 1c shows a cross sectional view of a crossbeam 120 of the handling system 100. At the crossbeam there are affixed two types of guide elements, a side guide element 121 and a front/back guide element 122. According to the embodiment described here the side guide element 121 comprises a slanted surface, which however cannot be seen in the perspective of Figure 1c. Further, the front/back guide element is a front/back stop element 122. The guide elements 121, 122 are adapted for ensuring that, when placing the nacelle supporting bed 150 onto the crossbeams 120 for instance by lowering the nacelle 190 together with the nacelle supporting bed 150, the nacelle supporting bed 150 is placed into a proper horizontal position onto the two crossbeams 120. Further details about the guide elements 121 and 122 will be given below, where a preferred procedure for placing the nacelle supporting bed 150 onto the two crossbeams 120 is described in more detail.

Figure 1d shows a front view of the handling system 100 together with the supported nacelle supporting bed 150. In this view there can be seen one complete supporting device 110 comprising one crossbeam 120 and two pedestals 130. Each pedestal 130 can be attached to the crossbeam 120 in a detachable manner via an attachment mechanism 125. The attachment mechanism may be realized by means of any connecting system. According to the embodiment described here the attachment mechanism 125 comprises a mechanical bolt 126 in order to secure the respective pedestal 130 to the crossbeam 120.

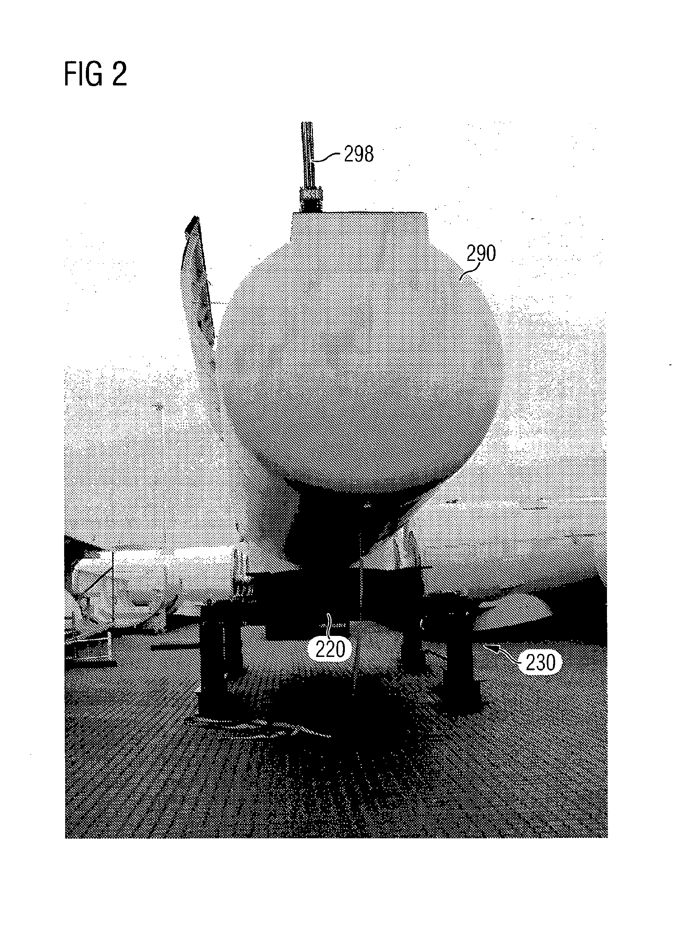

Figure 2 shows a photographic picture of a nacelle 290 being supported by a nacelle handling system in accordance with an embodiment of the invention. The nacelle 290 together with a nacelle supporting bed has been placed onto crossbeams 220 of the handling system. The loading of the nacelle 290 and its supporting bed has been carried out with a crane having a rope 298. Due to the perspective of Figure 2 only one crossbeam 220 of the two crossbeams of the handling system can be seen. However, in addition to the pedestals 230 of the front (depicted) crossbeam 220 also at least a portion of the pedestals being assigned to the rear crossbeam (not depicted) can be seen in Figure 2.

Figure 3 shows a photographic picture of a supporting device being loaded on a loading platform 396 of a truck. The supporting device comprises a crossbeam 320 and two pedestals, wherein only one pedestal 330 can be seen. Further, in Figure 3 next to the two workers a pedestal 330 of the other supporting device is also depicted.

As can be further seen from Figure 3 the pedestal 330 comprises a bottom beam 332, a vertical bar 334 and two slanted bars 336. The pedestal 330 is attached to the crossbeam 320 in a detachable manner by means of an attachment mechanism 325.

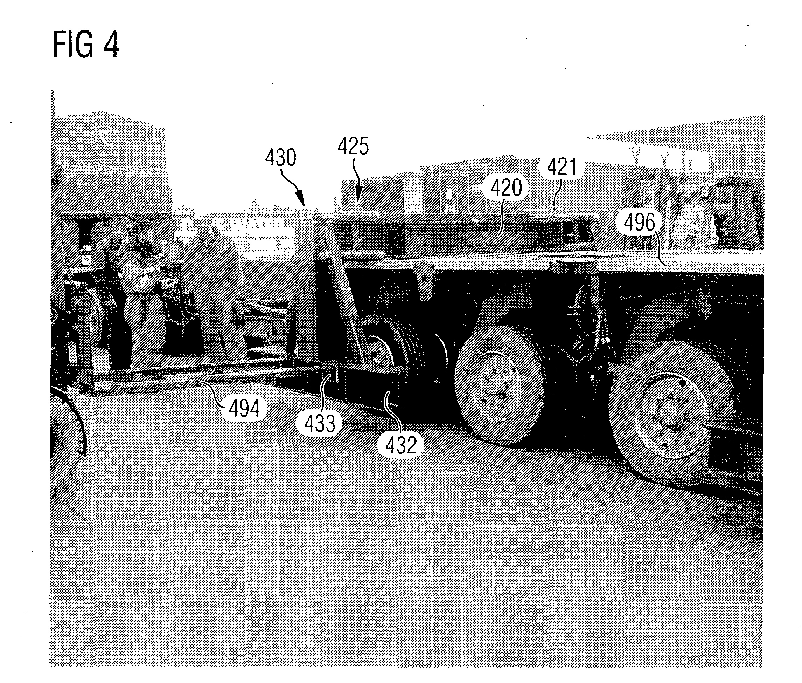

Figure 4 shows a photographic picture of a supporting device, which is placed on a loading platform 496 of a truck by means of two forklifts. Due to the perspective only one of the forklifts can be seen in this Figure. Again the detachable attachment of a pedestal 430 to a crossbeam 420 by means of an attachment mechanism 425 can be seen.

The fork 494 of the forklift engages into two engagement openings 433, which are formed within the bottom beam 432 of the pedestal 430. On the crossbeam 420 a side guide element 421 with a slanted surface is provided. Further details about the function of the side guide element 421 will be given below with reference to Figure 7.

Figure 5 shows a photographic picture of a nacelle handling system 500, which is now placed on the ground. A front crossbeam of the handling system 500 is denominated with reference numeral 520. A side guide element 521, which is provided at the crossbeam 520, is used for placing a nacelle supporting bed 550 in an appropriate horizontal position. According to the embodiment described here this is achieved by lowering the nacelle supporting bed 550, which supports a nacelle 590, onto the crossbeams 520. Thereby, a lower side edge of the nacelle supporting bed 550 slides along a slanted surface of the side guide element 521.

A connection element, which mechanically connects the nacelle 590 to the nacelle supporting bed 550, is denominated with reference numeral 592. According to the embodiment described here the connection element is a flange 592.

An attachment mechanism 525 can also be seen in Figure 5. The attachment mechanism 525 connects in a detachable manner a pedestal 530 to the crossbeam 520.

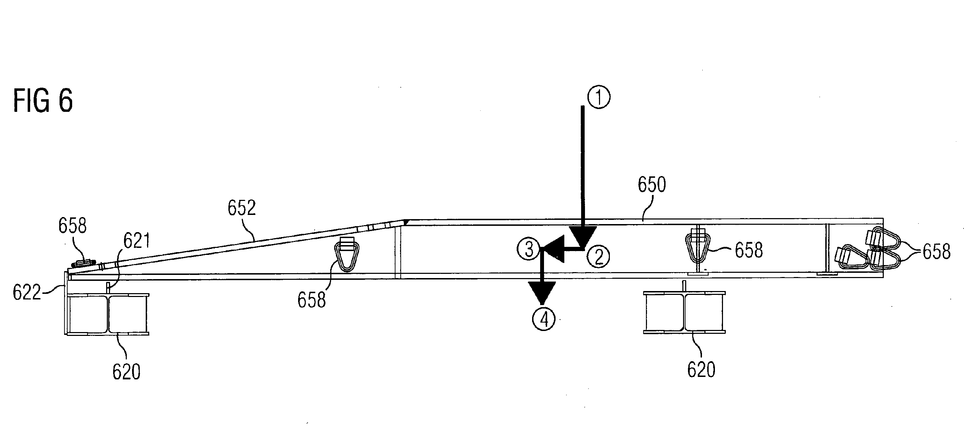

Figure 6 shows a cross sectional side view of a nacelle supporting bed 650 being supported by two crossbeams 620. At the front crossbeam there are provided both side guide elements 621 having a non depicted slanted surface and front guide elements 622. According to the embodiment described here the front guide elements are front stop elements. All the guide elements are used for ensuring and facilitating a proper placement of the nacelle supporting bed 650 onto the crossbeams 620.

The nacelle supporting bed 650 comprises a slanted surface 652, at which a flange of a nacelle can be attached. Eyes 658 can be used for handling the nacelle supporting bed 650 conveniently.

Figures 7a, 7b, 7c and 7d illustrate a procedure for placing a nacelle supporting bed 750 respectively a non depicted nacelle into a proper horizontal position onto two crossbeams 720, which represent respectively a part of a nacelle handling system in accordance with an embodiment of the invention. Figure 7a corresponds to a first relative position between the nacelle supporting bed 750 and the crossbeams 720. In the Figure 6 this first position is indicated with a circle 1. Figure 7b corresponds to a second relative position, which is indicated with a circle 2 in Figure 6. Figure 7c corresponds to a third relative position, which is indicated with a circle 3. Figure 7d corresponds to a forth relative position, which is indicated with a circle 4 in Figure 6.

According to the embodiment described here the nacelle supporting bed 750 comprises a slanted surface 752 and eyes 758.

The function of the slanted surface 752 and the function of the eyes 758 have already been described above.

The Figures 7a, 7b, 7c and 7d respectively show two different cross sectional views. The respective left figure framing shows a front end of the nacelle supporting bed 750 including the slanted surface 752 and an eye 758. The left figure framings are oriented parallel to a xz-plane. The respective right figure framings shows a central section of the nacelle supporting bed 750, which is placed or which is supposed to be placed onto the rear crossbeam 720. The right figure framings are oriented parallel to a yz-plane. Thereby, x, y, and z define a right angled cartesian coordinate system.

At the front cross beam 720, which can be seen respectively at the left figure framings, there are provided both side guide elements 721 and front guide elements 722. According to the embodiment described here the front guide elements are front stop elements. At the rear crossbeam 720 there are provided only side guide elements 721. Each side guide element 721 comprises a slanted surface.

As will be seen from the following description of a placement procedure of the nacelle supporting bed 750, all guide elements 721 and 722 are used for ensuring a proper placement of the nacelle supporting bed 750 onto the crossbeams 720.

In between the operational states shown in Figures 7a and 7b, the nacelle supporting bed 750 is lowered by e.g. a crane so that it is hanging just above the upper side of the crossbeams 720. Then, in between the operational states shown in Figures 7b and 7c the nacelle respectively the nacelle supporting bed 750 is moved or pushed forward so that the front end of the supporting bed 750 just hits the front guides 722. Then, in between the operational state shown in the Figures 7c and 7d the nacelle respectively the nacelle supporting bed 750 is simultaneously lowered and adjusted sideways between the side guides 721 while the supporting bed 750 is still hold against the front guides 722.

The side guides 721 are attached on top of at least one of the two crossbeams 720. One side guide 721 is attached at the left side and one side guide 721 is attached at the right side of the crossbeam 720. The two side guides 721 are spaced apart in a distance depending on the width of the nacelle supporting bed 750. The side guides are made with an angle respectively with a slanted surface, so that the distance between the right side guide 721 and the left side guide 721 is increasingly larger in the upwards direction.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### List of reference signs:

- 100: handling system
- 110: supporting device
- 120: crossbeam
- 121: side guide element (with slanted surface)
- 122: front/back guide element / front/back stop element
- 125: attachment mechanism
- 126: bolt
- 130: pedestal
- 132: bottom beam
- 133: engagement opening
- 134: vertical bar
- 136: slanted bar
- 140: distance element / distance bar
- 150: attachment arrangement / nacelle supporting bed
- 152: slanted surface
- 158: eyes
- 190: nacelle
- 192: connection element / flange

- 220: crossbeam
- 230: pedestal
- 290: nacelle
- 298: rope of crane

- 320: crossbeam
- 325: attachment mechanism
- 330: pedestal
- 332: bottom beam
- 334: vertical bar
- 336: slanted bar
- 396: loading platform

- 420: crossbeam
- 421: side guide element (with slanted surface)
- 425: attachment mechanism
- 430: pedestal
- 432: bottom beam
- 433: engagement opening
- 494: fork
- 496: loading platform

- 500: handling system
- 520: crossbeam
- 521: side guide element (with slanted surface)
- 525: attachment mechanism
- 530: pedestal
- 550: attachment arrangement / supporting bed
- 590: nacelle
- 592: connection element / flange

- 620: crossbeam
- 621: side guide element (with slanted surface)
- 622: front guide element / front stop element
- 650: attachment arrangement / supporting bed
- 652: slanted surface
- 658: eyes

- 720: crossbeam
- 721: side guide element (with slanted surface)
- 722: front guide element / front stop element
- 750: attachment arrangement / supporting bed
- 752: slanted surface
- 758: eye

## Claims

1. A system for handling a nacelle (190) of a wind turbine, in particular for handling a nacelle (190) of a wind turbine for the purpose of transporting the nacelle (190), the system (100) comprising
• a first supporting device (110) and
• a second supporting device (110), wherein
each supporting device comprises
- a crossbeam (120) extending between a left end section of the crossbeam (120) and a right end section of the crossbeam (120), the crossbeam (120) being adapted for supporting the nacelle (190) in between the left end section and the right end section,
- a left pedestal (130) being attached to the left end section
in a detachable manner,
- a right pedestal (130) being attached to the right end section in a detachable manner,
- at least one left engagement opening (133) being formed on a left side of the supporting device (110),
- at least one right engagement opening (133) being formed on a right side of the supporting device (110), **characterised in that**
- at least one guide element (121, 122), which is provided at the crossbeam (120) and which is adapted for ensuring that when placing the nacelle (190) onto the crossbeam (120) the nacelle (190) is placed in a proper horizontal position.

2. The system as set forth in claim 1, wherein
the crossbeam (120) is adapted to indirectly support the nacelle (190).

3. The system as set forth in claim 2, wherein
the crossbeam (120) is adapted to support an attachment arrangement (150), which is constructed in such a manner that for transporting and/or storing the nacelle (190) the nacelle (190) can be attached to the attachment arrangement (150) in a detachable manner.

4. The system as set forth in any one of the preceding claims, wherein
the left pedestal (130) and/or the right pedestal (130) is capable of being adapted with respect to the vertical extension of the respective pedestal (130).

5. The system as set forth in any one of the preceding claims, further comprising
a distance element (140), which extends between the first supporting device (110) and the second supporting device (110) and which is attached to the two supporting devices (110) in a demountable manner.

6. The system as set forth in any one of the preceding claims, wherein
the length of the crossbeam (120) is adjustable.

7. The system as set forth in any one of the preceding claims, wherein
the guide element (121) is formed in such a manner that a correct placement of the nacelle (190) with respect to a longitudinal extension of the crossbeam (120) is ensured.

8. The system as set forth in any one of the preceding claims, wherein
the guide element (122) is formed in such a manner that a correct placement of the nacelle (190) with respect to a direction being perpendicular to a longitudinal extension of the crossbeam (120) is ensured.

9. The system as set forth in any one of the preceding claims, wherein
the guide element (121) comprises a slanted surface.

10. A method for handling a nacelle (190) of a wind turbine with a system (100) as set forth in any one of the preceding claims, the method comprising
• bringing the nacelle (190) to a position with respect to the system (100), wherein the two crossbeams (120) of the system (100) are located below the nacelle (190), and
• lifting the system (100) and/or lowering the nacelle (190) such that the nacelle (190) is directly or indirectly supported by the two crossbeams (120).

## Patentansprüche

1. System zur Handhabung einer Gondel (190) einer Windturbine, insbesondere zur Handhabung einer Gondel (190) einer Windturbine zum Zwecke des Transportierens der Gondel (190), wobei das System (100) umfasst:
• eine erste Stützvorrichtung (110) und
• eine zweite Stützvorrichtung (110), wobei
jede Stützvorrichtung umfasst:
- einen Querträger (120), der sich zwischen einem linken Endabschnitt des Querträgers (120) und einem rechten Endabschnitt des Querträgers (120) erstreckt, wobei der Querträger (120) dazu eingerichtet ist, die Gondel (190) zwischen dem linken Endabschnitt und dem rechten Endabschnitt zu stützen,
- einen linken Standfuß (130), der auf eine lösbare Weise an dem linken Endabschnitt befestigt ist,
- einen rechten Standfuß (130), der auf eine lösbare Weise an dem rechten Endabschnitt befestigt ist,
- mindestens eine linke Eingriffsöffnung (133), die auf einer linken Seite der Stützvorrichtung (110) ausgebildet ist,
- mindestens eine rechte Eingriffsöffnung (133), die auf einer rechten Seite der Stützvorrichtung (110) ausgebildet ist, **dadurch gekennzeichnet, dass**
- mindestens ein Führungselement (121, 122) an dem Querträger (120) vorgesehen ist, welches dazu eingerichtet ist, sicherzustellen, dass, wenn die Gondel (190) auf dem Querträger (120) angeordnet wird, die Gondel (190) in einer richtigen horizontalen Position angeordnet wird.

2. System nach Anspruch 1, wobei
der Querträger (120) dazu eingerichtet ist, die Gondel (190) indirekt zu stützen.

3. System nach Anspruch 2, wobei
der Querträger (120) dazu eingerichtet ist, eine Befestigungsanordnung (150) zu stützen, welche auf eine solche Weise konstruiert ist, dass zum Transportieren und/oder Lagern der Gondel (190) die Gondel (190) auf eine lösbare Weise an der Befestigungsanordnung (150) befestigt werden kann.

4. System nach einem der vorhergehenden Ansprüche, wobei
der linke Standfuß (130) und/oder der rechte Standfuß (130) in Bezug auf die vertikale Erstreckung des jeweiligen Standfußes (130) angepasst werden kann.

5. System nach einem der vorhergehenden Ansprüche, welches ferner umfasst
ein Distanzelement (140), welches sich zwischen der ersten Stützvorrichtung (110) und der zweiten Stützvorrichtung (110) erstreckt und welches auf eine demontierbare Weise an den zwei Stützvorrichtungen (110) befestigt ist.

6. System nach einem der vorhergehenden Ansprüche, wobei
die Länge des Querträgers (120) einstellbar ist.

7. System nach einem der vorhergehenden Ansprüche, wobei
das Führungselement (121) auf eine solche Weise geformt ist, dass eine korrekte Anordnung der Gondel (190) in Bezug auf eine Längserstreckung des Querträgers (120) sichergestellt ist.

8. System nach einem der vorhergehenden Ansprüche, wobei
das Führungselement (122) auf eine solche Weise geformt ist, dass eine korrekte Anordnung der Gondel (190) in Bezug auf eine Richtung, die zu einer Längserstreckung des Querträgers (120) senkrecht ist, sichergestellt ist.

9. System nach einem der vorhergehenden Ansprüche, wobei das Führungselement (121) eine Schrägfläche umfasst.

10. Verfahren zur Handhabung einer Gondel (190) einer Windturbine mit einem System (100) nach einem der vorhergehenden Ansprüche, wobei das Verfahren umfasst:
• Bringen der Gondel (190) in eine Position in Bezug auf das System (100), in der sich die beiden Querträger (120) des Systems (100) unter der Gondel (190) befinden, und
• Anheben des Systems (100) und/oder Absenken der Gondel (190), derart, dass die Gondel (190) direkt oder indirekt von den beiden Querträgern (120) gestützt wird.

## Revendications

1. Système de manipulation d'une nacelle (190) d'une éolienne, en particulier de manipulation d'une nacelle (190) d'une éolienne aux fins de transporter la nacelle (190), le système (100) comprenant
• un premier dispositif de support (110) et
• un deuxième dispositif de support (110), dans lequel chaque dispositif de support comprend
- une traverse (120) s'étendant entre une section d'extrémité gauche de la traverse (120) et une section d'extrémité droite de la traverse (120), la traverse (120) étant adaptée à supporter la nacelle (190) entre la section d'extrémité gauche et la section d'extrémité droite,
- un socle gauche (130) étant fixé à la section d'extrémité gauche d'une manière détachable,
- un socle droit (130) étant fixé à la section d'extrémité droite d'une manière détachable,
- au moins une ouverture gauche d'engagement (133) étant formée sur un côté gauche du dispositif de support (110),
- au moins une ouverture droite d'engagement (133) étant formée sur un côté droit du dispositif de support (110), **caractérisé en ce que**
- au moins un élément guide (121, 122), qui est prévu au niveau de la traverse (120) et qui est adapté à assurer que, lors de la mise en place de la nacelle (190) sur la traverse (120), la nacelle (190) soit placée dans une position horizontale appropriée.

2. Système selon la revendication 1, dans lequel la traverse (120) est adaptée à supporter indirectement la nacelle (190).

3. Système selon la revendication 2, dans lequel
la traverse (120) est adaptée à supporter un agencement de fixation (150), qui est construit de telle manière que, pour transporter et/ou stocker la nacelle (190), la nacelle (190) peut être fixée à l'agencement de fixation (150) d'une manière détachable.

4. Système selon l'une quelconque des revendications précédentes, dans lequel
le socle gauche (130) et/ou le socle droit (130) sont/est apte(s) à être adapté(s) par rapport à l'extension verticale du socle (130) respectif.

5. Système selon l'une quelconque des revendications précédentes, comprenant en outre
un élément de distance (140), qui s'étend entre le premier dispositif de support (110) et le deuxième dispositif de support (110) et qui est fixé aux deux dispositifs de support (110) d'une manière démontable.

6. Système selon l'une quelconque des revendications précédentes, dans lequel
la longueur de la traverse (120) est ajustable.

7. Système selon l'une quelconque des revendications précédentes, dans lequel
l'élément guide (121) est formé de telle manière qu'une mise en place correcte de la nacelle (190) par rapport à une extension longitudinale de la traverse (120) est assurée.

8. Système selon l'une quelconque des revendications précédentes, dans lequel
l'élément guide (122) est formé de telle manière qu'une mise en place correcte de la nacelle (190) par rapport à un sens étant perpendiculaire à une extension longitudinale de la traverse (120) est assurée.

9. Système selon l'une quelconque des revendications précédentes, dans lequel
l'élément guide (121) comprend une surface inclinée.

10. Procédé de manipulation d'une nacelle (190) d'une éolienne avec un système (100) selon l'une quelconque des revendications précédentes, le procédé comprenant
• la mise de la nacelle (190) dans une position par rapport au système (100) dans laquelle les deux traverses (120) du système (100) sont situées en-dessous de la nacelle (190), et
• le levage du système (100) et/ou l'abaissement de la nacelle (190) de façon à ce que la nacelle (190) soit directement ou indirectement supportée par les deux traverses (120).
